# EUROPEAN PATENT APPLICATION

(11) **EP 2 018 059 A1**
(43) Date of publication of application: **21.01.2009**
(21) Application number: 07014176.7
(22) Date of filing: 19.07.2007
(51) Int. Cl.: H04N 7/16, H04N 7/167, H04N 5/00

(54) **Digital video broadcast receiver and method for decrypting of digital data streams**

(71) Applicant: Panasonic Corporation, Kadoma-shi Osaka 571-8501 (JP)
(72) Inventor: Rosenboom, Jens, 63225 Langen (DE); Kaiser, Martin, 65933 Frankfurt (DE)
(74) Representative: Gerstein, Hans Joachim

(57) **Abstract**

A digital video broadcast receiver (1) comprising a common-interface module (3) and a receiver module (2). Said common-interface module (3) comprises an entitlement message replacement unit (5) provided for separating and discarding entitlement management messages (EMM) and entitlement control messages (ECM) of a received data stream, encrypting new entitlement control messages (ECM) that contain calculated control words, and inserting the encrypted new entitlement control messages (ECM) into the received data stream to replace a discarded entitlement management messages (EMM) and entitlement control messages (ECM). Said receiver module (3) comprising a decryption unit (12) provided for receiving the broadcast digital data stream comprising the encrypted new entitlement control message (ECM) and extracting and decrypting the control words calculated in the common-interface module (3) upon receipt of a new entitlement control message (ECM) and decrypting of data packets of the digital data stream by use of said control words, and a decoder unit (15) for decoding said digital data stream.

## Description

The invention relates to a method for decrypting digital data streams encrypted according to the digital video broadcast-common-interface-standard (EN 50 221).

The invention further relates to a digital video broadcast receiver comprising a common-interface module and a receiver module.

The digital-video-broadcast-standard EN 50 221 defines a DVB-common-interface using PC-card modules that are plugged into a receiver and descramble pay-TV services.

The common-interface-module contains, according to the DVB-standard, a decoder for the algorithm used to encrypted digital TV stream, .e.g the Common Scrambling Algorithm (CSA), the Data Encryption Standard (DES) or the Advanced Encryption Standard (AES). The common-interface-module decrypts the received broadcast content using this algorithm. To generate the keys for the decryption, the common-interface-module uses private information stored on a subscriber's smartcard together with entitlement management messages EMM and entitlement control messages ECM embedded in the digital TV stream. The common-interface-module sends the decrypted data stream to the receiver in the clear.

It is for this reason that a significant number of content owners do not accept the Common-Interface-Standard for broadcasting their content.

The object of the present invention is to provide an improved method for decrypting digital data streams encrypted according to the DVB-Common-Interface-Standard and an improved Digital Video Broadcast receiver, comprising a common-interface-module and a receiver module, through which the content is still protected when transferring the digital data stream from the common-interface-module to a receiver.

The object is achieved by the method according to claim 1 and the digital video broadcast receiver according to claim 9.

Improved embodiments are disclosed in the depending claims.

The method for decrypting of digital data streams encrypted according to the DVB-Common-Interface-Standard according to the present invention comprises the steps of:
a) receiving a digital data stream in a common-interface-module;
b) separating and discarding entitlement control messages (ECM) and entitlement management messages (EMM) in the received data stream;
c) determining of control words that allow to decrypt the received data stream;
d) encrypting new entitlement control messages (ECM), that contain the calculated control words;
e) inserting the encrypted new entitlement control messages (ECM) into the received data stream;
f) forwarding the received data stream comprising the new encrypted entitlement control messages (ECM) to a receiver module;
g) extracting and decrypting the determined control word upon receipt of a new entitlement control message (ECM) by the receiver module, and
h) decrypting data packets of the received digital data stream and decoding said digital data stream.

According to the present invention, decryption of the digital data stream is performed on the receiver module only and not inside the common-interface-module as it is done in the' prior art. This way, additional decryption and encryption of the data stream decrypted in the common-interface-module for securing the data stream from the common-interface-module to the receiver module is avoided.

In order to allow decryption of the digital data stream in the receiver module, the common-interface-module is provided for calculate in the control words that allow the receiver module to decrypt the data stream. The common-interface-module discards the original entitlement management messages EMM and entitlement control messages ECM that are included in the transport data stream of a DVB-data stream. Further, the common-interface-module is provided to calculate new entitlement control messages ECM that contain a calculated control word that allow the receiver module to decrypt the data stream. These new entitlement control messages are encrypted by the common-interface-module using e.g. a symmetric cipher.

The advantage of this procedure is that re-encrypting the entitlement control message is much easier than re-encrypting the entire data stream because the data rate of the control words is significantly lower than the data rate of the data stream.

In a preferred embodiment, the control words used for decrypting the data stream are determined as a function of the discarded entitlement management messages EMM and entitlement control messages ECM and data stored in a smart memory card that allow decryption of a specified digital data stream content. Thus, the allowance for decrypting a broadcast content is checked in the common-interface-module by use of subscriber-specific information contained on the smartcard.

Preferably, additional session keys are exchanged between the common interface module and the receiver module in order to encrypt the new entitlement control messages by use of these exchanged session keys. Decryption of the specified digital data stream content is then taking place in the receiver module by use of the session key.

In a preferred embodiment, the extracted and decrypted control words are passed to a data stream decryption unit. In the transport stream decryption unit, the transport stream packets of a received digital data stream are decrypted dependent on their transport scrambling control flags by use of the control words. Transport stream packets containing entitlement control messages ECM sections are not decrypted by the transport stream control unit.

Transport stream packets which are still containing entitlement control messages ECM are ignored by the receiver in the step of decrypting data packets of the received digital data stream.

Further, it is preferred to demultiplex the received data stream after the step of decrypting data packets of the received data stream and before the step of decoding elementary data stream of the digital data stream in order to split the transport data stream into its components, e.g. video data stream, audio data stream and data sections and section containing entitlement control messages ECM.

The object is further achieved by the digital video broadcast receiver comprising the features of claim 9.

The digital broadcast receiver comprises a common-interface module and a receiver module. According to the present invention, the common-interface module comprises an entitlement message replacement unit provided for separating and discarding entitlement management messages EMM and entitlement control messages ECM of a received data stream, calculating of control words that allow to decrypt the received data stream, encrypting new entitlement control messages ECM that contain these calculated control words, and inserting the encrypted new entitlement control messages ECM into the received data stream to replace a discarded entitlement management messages EMM and entitlement control messages ECM. According to the present invention, said receiver module comprises a decryption unit provided for receiving the broadcast digital data stream comprising the encrypted new entitlement control message ECM and extracting and decrypting the control words calculated in the common-interface module upon receipt of a new entitlement control message ECM and decrypting of data packets of the digital data stream by use of said control words. Further, a well known decoder unit is provided for decoding the digital data stream decrypted by the common-interface module and receiver module.

Preferably, the receiver module comprises a tuner and a demodulator unit provided for receiving a broadcast radio frequency signal and demodulating said signals to extract digital data streams broadcasted in selected channels.

In a preferred embodiment, the receiver module and the common-interface module both contain a unit to generate a common session key. The control words in the newly generated entitlement control messages ECMs will be encrypted using this session key. The communication for session key generation uses Common Interface's control connection as defined in EN 50221.

The present invention is further explained by way of an example with the enclosed drawings. Is shows:
- Figure 1 -: block diagram of a digital video broadcast receiver according to the present invention.
- Figure 2 -: flow diagram of the method for decrypting of digital data streams.

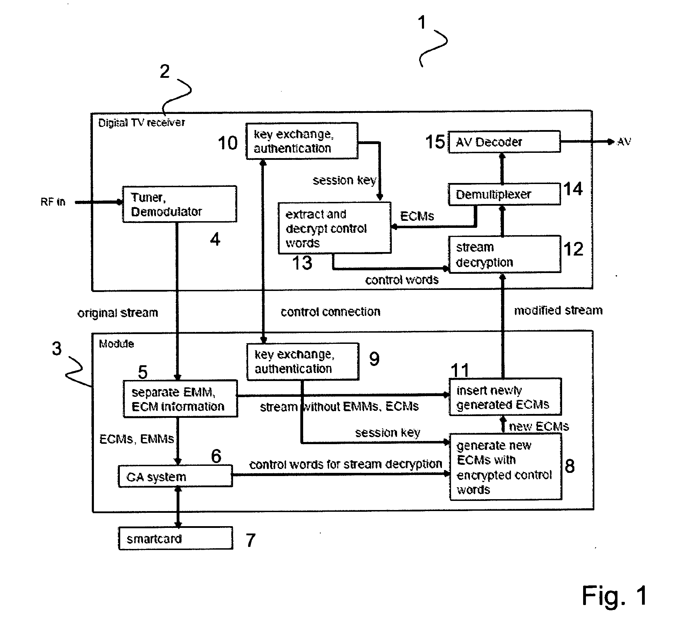

Figure 1 shows a block diagram of a digital video broadcast receiver 1 of the present invention. The digital broadcast receiver comprises a receiver module 2 and a common-interface module 3, a radio frequency signal RF is fed to a tuner and demodulator unit 4 of the receiver module 2. The tuner and demodulator unit 4 is provided to receive a broadcast channel in a selected broadcast frequency and to demodulate the received radio frequency signal and output a transport stream to the common-interface module through an original stream interface connection. The output transport stream of the receiver module is led into an entitlement message replacement unit 5 provided for separating and discarding entitlement management messages EMM and entitlement control messages ECM of the received transport stream. The separated entitlement management messages EMM and entitlement control messages ECM are forwarded to an access control unit 6 being provided for calculating of control words that allow to decrypt the received data stream. The control words are calculated as function of entitlement control messages ECM, entitlement management messages EMM and subscriber-specific information stored in a smart card 7 of a user that allows the user to decrypt subscribed broadcast content. An entitlement control message generation unit 8 is provided to generate new entitlement control messages ECM with the encrypted control words. The new entitlement control messages ECM are further decrypted by use of a session key provided by a session key exchange unit 9 of the common-interface module an a corresponding session key exchange unit 10 of the receiver module.

The new entitlement control messages ECM are inserted into the original data stream provided by the entitlement message replacement unit 5 which does not contain the entitlement management message EMM and entitlement control messages ECM of the original received data stream. For this, an ECM insertion unit 11 is provided in the common-interface module 3.

The access control unit 6, the entitlement control message generation unit 8 and the insertion unit 11 are shown as separate unit blocks, but are part of the function of the entitlement message replacement unit 5. All four units together perform the desired function to replace the original entitlement management messages EMM and entitlement control messages ECM with the newly generated entitlement control messages ECM which are decoded using the session key calculated by both host and module.

The receiver module comprises a decryption unit 12 provided for receiving the broadcasted digital data stream modified by the common-interface module and comprising the encrypted new entitlement control message ECM. The decryption is taking place by control words extracted and decrypted by use of the session key and the new entitlement control messages ECM, which are forwarded to the control word extraction and decryption unit 13 from a demultiplexer unit 14. The demultiplexer unit 14 is provided to split the decrypted data stream into its components, namely an audio data stream, a video data stream and / or data sections.

Each of the demultiplex components of the decrypted data stream is forwarded to an audio-video-decoder unit 15 provided for decoding the decrypted audio- and video data streams. Optionally, the audio-video-decoder unit 15 can be provided for decoding data of the data sections. The decoded data streams are forwarded to a display or loudspeaker of a television set.

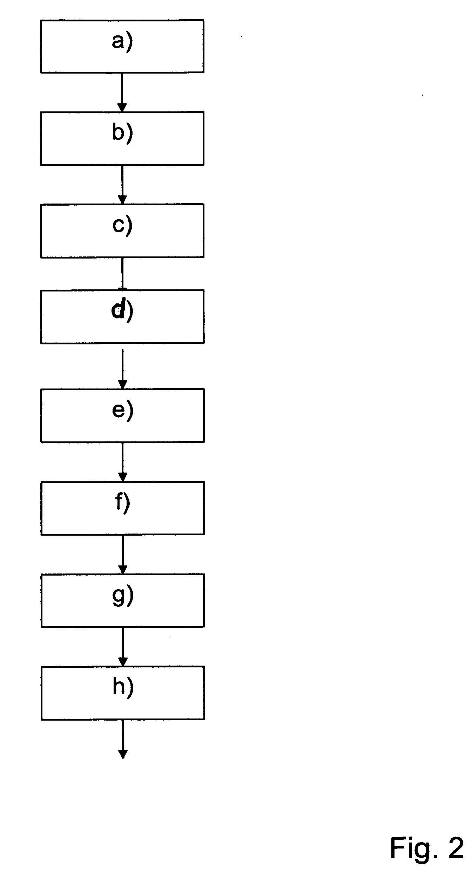

Figure 2 shows a flow diagram of the method for decrypting of digital data streams encrypted according to the DVB-common-interface-standard, which is performed by the digital video broadcast receiver 1 shown in figure 1.

In a first step a) a digital data stream is received in the common-interface-module 3. In a second step b), entitlement control messages ECM and entitlement management messages EMM are separated and discarded in the received data stream.

In the third step c), control words are determined that allow to decrypt the received data stream.

In the fourth step d), new entitlement control messages ECM are encrypted that contain calculated control words.

In the fifths step e), the encrypted new entitlement control messages ECM are inserted into the received data stream.

In the sixth step f), the received data stream comprising the new encrypted entitlement control messages ECM are forwarded to the receiver module 2.

In the seventh step g), the determine control words are extracted and decrypted upon receipt of a new entitlement control message ECM by the receiver module 2.

In the eighth step h), data packets of the received digital data stream are decrypted and said digital data stream is decoded.

## Claims

1. Method for decrypting of digital data streams encrypted according to the DVB-common-interface standard **characterized by**:
a) receiving a digital data stream in a common-interface-module (3);
b) separating and discarding entitlement control messages (ECM) and entitlement management messages (EMM) in the received data stream;
c) determining of control words that allow to decrypt the received data stream;
d) encrypting new entitlement control messages (ECM), that contain the calculated control words;
e) inserting the encrypted new entitlement control messages (ECM) into the received data stream;
f) forwarding the received data stream comprising the new encrypted entitlement control messages (ECM) to a receiver module (2);
g) extracting and decrypting the determined control word upon receipt of a new entitlement control message (ECM) by the receiver module (2), and
h) decrypting data packets of the received digital data stream and decoding said digital data stream.

2. Method according to claim 1, **characterized by** determining the control words used for decrypting the data stream as a function of the discarded entitlement management message (EMM) and entitlement control message (ECM) and data stored in a smart memory card that allow decryption of a specified digital data stream content.

3. Method according to claim 1 or 2, **characterized by** establishing a secure authenticated channel between the common-interface module (3) and the receiver module (2) using said channel to share a session key and using this session key to encrypt and decrypt the control words which are inserted into the newly generated entitlement control messages (ECM).

4. Method according to claim 3, **characterized by** decrypting new entitlement control messages (ECM) received by the receiver module (2) by use of the session key.

5. Method according to one of the preceding claims, **characterized by** passing the extracted and decrypted control words to a transport stream decryption unit (12) and decrypting the transport stream packets of a received digital data stream depending on the their transport scrambling control flags by use of the control words.

6. Method according to one of the preceding claims, **characterized in that** transport stream packets still containing entitlement management messages (EMM) or entitlement control messages (ECM) are ignored in the step of decrypting data packets of the received digital data stream.

7. Method according to one of the preceding claims, **characterized by** demultiplexing the received data stream after the step of decrypting data packets of the received data stream and before the step of decoding elementary data streams of the digital data stream in order to split the transport data stream into its components.

8. Method according to claim 7, **characterized by** splitting the transport data stream into audio data streams, video data streams and/or data sections.

9. Digital video broadcast receiver (1) comprising a common-interface module (3) and a receiver module (2), said common-interface module (3) comprising an entitlement message replacement unit (5, 6, 8, 11) provided for separating and discarding entitlement management messages (EMM) and entitlement control messages (ECM) of a received data stream, calculating of control words that allow to decrypt the received data stream, encrypting new entitlement control messages (ECM), that contain the calculated control words, and inserting the encrypted new entitlement control messages (ECM) into the received data stream to replace the discarded entitlement management messages (EMM) and entitlement control messages (ECM); and said receiver module (2) comprising a decryption unit (12) provided for receiving the broadcasted digital data stream comprising the encrypted new entitlement control messages (ECM) and extracting and decrypting the control words calculated in the common-interface module (3) upon receipt of a new entitlement control message (ECM) and decrypting of data packets of the digital data stream by use of said control words, and a decoder unit (15) for decoding said digital data stream.

10. Digital video broadcast receiver (1) according to claim 9, **characterized in that** the receiver module (2) comprising a tuner and a demodulator unit (4) provided for receiving a broadcast radio frequency signal and demodulating said signal to extract digital data streams broadcasted in selected channels.

11. Digital video broadcast receiver (1) according to claim 9 or 10, **characterized in that** the receiver module (2) and the common-interface module (3) each comprises a session key exchange unit (9, 10) for defining and exchanging of session keys provided for use of encrypting and decrypting the new entitlement control messages (ECM).

12. Digital video broadcast receiver (1) according to one of the claims 9 to 11, **characterised in that** the receiver module (2) comprises a demultiplexer unit (14) connected to the output of the decryption unit (12) and provided for splitting the decrypted data stream into its components like audio data stream, video data stream and/or data sections.
